# EUROPEAN PATENT APPLICATION

(11) **EP 2 169 564 A1**
(43) Date of publication of application: **31.03.2010**
(21) Application number: 08017142.4
(22) Date of filing: 29.09.2008
(51) Int. Cl.: G06F 17/30

(54) **Database system, access application and method for controlling access to contents of an external database**

(71) Applicant: Software AG, 64297 Darmstadt (DE)
(72) Inventor: Ristow, Gerald, Dr., 64347 Griesheim (DE); Voegele, Joachim, 64560 Riedstadt (DE)
(74) Representative: Heselberger, Johannes

(57) **Abstract**

The present invention relates to a database system (2) for providing access to contents (100) of a database (10), the database system (2) comprising:
a. a control logic (25) being adapted for extracting a subset (100') of the contents (100) and / or corresponding reference information (120) from the database (10) and for applying a time-stamp to the extracted contents (100');
b. a read-only database (20) being adapted for storing the extracted contents (100') and / or the corresponding reference information (120); wherein
c. the control logic (25) is adapted for providing access to the extracted contents (100') and / or the corresponding reference information (120) only through an access application (30).

## Description

### 1. Technical Field

The present invention relates to a database system, an access application and a method for controlling access to contents of an external database.

### 2. The Prior Art

Large databases typically store huge amounts of data. When querying the contents of a large database, it may be necessary to search through the full content, which can make the retrieval of the searched contents time-consuming and resource-intensive. Furthermore, in most cases a connection to the database has to be maintained throughout the query process, which may be inconvenient in distributed environments, e.g. over slow internet-connections. Additionally, the contents in the database may change over time, thus making a later exact reference of the retrieved contents difficult or impossible. When archiving copies of already-retrieved contents for later reuse, copyright-issues may arise, i.e. it has to be guaranteed that the retrieved contents are not misused by unauthorized parties.

The above described disadvantages are present in a variety of scenarios, for example in digital libraries which are accessible over the internet or on-site. In this context, it may be furthermore very costly to access the digital library since a customer has the potential to use the full content, i.e. the whole digital library is searchable, even if the customer only wants to access a certain part of the contents. Another scenario is e.g. the retrieving of financial data of an enterprise during an audit. In this context, it is especially needed to retrieve a well-defined unchangeable snapshot of the dynamically changing financial information which is unambiguously assignable afterwards, as well as to guarantee a strict access restriction only to authorized personnel.

In view of the above, it is therefore the technical problem of the present invention to provide access to a database which at least partly overcomes the disadvantages of the prior art.

### 3. Summary of the Invention

This problem is according to one aspect of the invention solved by a database system for providing access to contents of a database. In the embodiment of claim 1, the database system comprises:
a. a control logic being adapted for extracting a subset of the contents and / or corresponding reference information from the database and for applying a time-stamp to the extracted contents;
b. a read-only database being adapted for storing the extracted contents and / or the corresponding reference information; wherein
c. the control logic is adapted for providing access to the extracted contents and / or the corresponding reference information only through an access application.

Accordingly, a database system provides access to contents of a database. To this end, the database system may comprise a control logic which is capable of extracting a subset of the contents from the database, e.g. in response to a query. Additionally or alternatively, reference information of the extracted contents may be retrieved which may e.g. comprise references onto the original contents of the database. The extracted contents are time-stamped and stored in a read-only database for later reference, preferably together with the reference information. This has the advantage that further changes are excluded and an exact date of the extracted content is known. This can be viewed as a kind of information safe. By restricting the contents of the read-only database to a subset of the full contents of the original database, it is easy to restrict the contents to a particular area of interest which makes the costs for users lower and the access to the contents faster. Furthermore, the extracted contents in the read-only database can preferably only be accessed through a special access application in order to allow access control e.g. for copyright reasons and to make sure that the results of a more-detailed search will always be accompanied by the correct reference, so that the original contents of the database may be searched via the reference information.

In one aspect of the invention, the control logic may be further adapted for encrypting and / or compressing the extracted contents and / or the corresponding reference information. The encryption of the extracted contents may serve for security-aspects such as copyright-protection, the compression may enable a faster retrieval since less transfer bandwidth is needed when accessing the extracted contents from the read-only database.

In another aspect, the control logic may be further adapted for exporting the extracted contents and / or the corresponding reference information onto a read-only medium. Thus, it is possible to send a medium (e.g. a DVD, memory stick, blue-ray disk, hard disk, etc.) with the extracted contents to recipients wherever needed, so that the recipients do not have to establish a connection to the read-only database.

The present invention also relates to an access application for providing access to contents of a database, wherein the access application is adapted for controlling access to extracted contents and / or corresponding reference information of any of the above database systems. The extracted contents can preferably only be accessed in a controlled way via a special access application in order to avoid misuse. The access application could for example be provided to authorized recipients over the internet, so that only those recipients can access the extracted contents in the read-only database.

Alternatively or additionally, the access application may be stored on a read-only medium, wherein the read-only medium comprises the extracted contents and / or the corresponding reference information and wherein the access application is adapted for providing access to the extracted contents and / or the corresponding reference information stored on the read-only medium. Accordingly, providing the extracted contents together with the access application on a read-only medium makes the need for an (online) connection obsolete when accessing the extracted contents.

In one aspect, the access application may be adapted for providing access to the extracted contents and / or the corresponding reference information based on a time-restriction and / or a license file.

Furthermore, the access application may be adapted for restricting access to only a part of the extracted contents and / or the corresponding reference information. This allows for even more controlled access to the extracted information. In the exemplary scenario of a digital library described in the introductory part above, only part of the research data could be accessible, accompanied with the correct reference information, e.g. the journal the information was published in.

A variety of further advantageous features are possible, e.g. the access application could be adapted for copying the extracted contents and / or the corresponding reference information to a clipboard for further processing. In the scenario of a digital library comprising research results, a user could then copy the information from the clipboard into his/her own publication. Also the size of the information that can be copied may be limited by the access application.

The present invention also concerns a system for providing access to contents of a database, wherein the system comprises any of the above database systems and any of the above access applications. Furthermore, a method is provided for providing access to contents of a database using any of the above database systems and any of the above access applications. Finally, the present invention also refers to a computer program comprising instructions for implementing the method.

### 4. Short Description of the Drawings

In the following detailed description, presently preferred embodiments of the invention are further described with reference to the following figure:

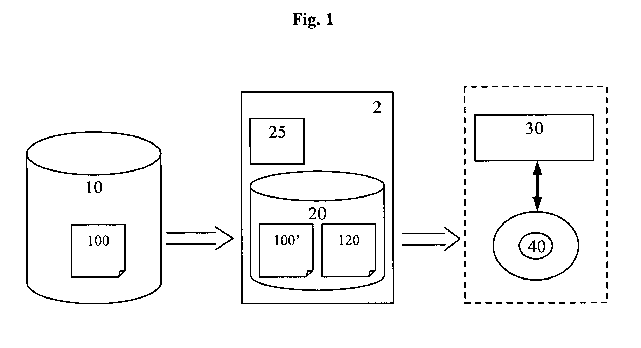

- Fig. 1:: A schematic view of a preferred embodiment of the present invention;

### 5. Detailed Description

In the following, a presently preferred embodiment of the invention is described with respect to a database system 2 as schematically shown in Fig. 1. As can be seen, the database system 2 comprises a control logic 25 as well as a read-only database 20. It should be appreciated that the database system 2 may be implemented in a variety of ways and that Fig. 1 only shows one exemplary alternative. For example the control logic 25 does not have to be provided as a distinct component but could as well be implemented directly in the database 20 or e.g. external from the database system 2.

The database system 2 is designed for storing contents 100' which may be extracted from a database 10 which comprises contents 100. The database system 2 is preferably designed for also storing reference information 120 of the extracted contents 100', e.g. in the form of references onto the original contents 100 in the database 10. The database 10 could be an external database e.g. connected to the database system 2 over a network such as the internet, or e.g. be integrated into the database system 2.

Fig. 1 further shows an access application 30 which serves for providing access to the extracted contents 100' of the database system 2 in a controlled way. The access application 30 may therefore exclusively and directly access the contents 100' in the read-only database 20. Alternatively or additionally, the contents 100' may be exported onto a read-only medium 40, such as a DVD, memory stick, blue-ray disk, hard disk, or any kind of read-only and preferably mobile storage means. In a preferred embodiment, also the access application 30 is stored on the storage medium 40 and controls access to the extracted contents 100' stored on the storage medium 40.

In the following, an embodiment of the present invention is described in the context of a digital library 10 comprising research results 100. It should however be appreciated that the invention can as well be used in a wide variety of other application areas, e.g. the revision-safe retrieving of financial data of an enterprise during an audit or the storage of certain "snapshots" of technical engineering drawings during the development of automobiles.

The present invention first extracts the research results 100 from the digital library 10 preferably via a query. This query could extract only a subset 100' of the available research results 100. However, it is also possible to extract the full content e.g. by using wildcards. The extracted research results 100' are preferably time-stamped and stored in a read-only research database 20 for later usage. For copyright, security as well as handling reasons, it might be desired to encrypt or compress the extracted research results 100'. To this end, the extracted research results 100' may e.g. be encrypted using an asymmetric encryption technique, i.e. the extracted research results 100' may be encrypted using a public key and only a special research application 30 has the corresponding private key for decrypting the extracted research results 100'. Alternatively, any other kind of encryption technique may be implemented.

By restricting the extracted research results 100' of the read-only research database 20 to a subset of the full digital library 10 (via the query), it is easy to restrict the content to a particular area which makes the costs for the user lower and the access to the content faster. The extracted research results 100' may be moved to a read-only medium 40. This has the advantage that no changes can occur anymore and an exact date of the content state is known. It is possible to send the read-only medium 40 with all material available about a certain topic in the digital library 10 to recipients wherever needed. Additionally or alternatively, only parts of the extracted research results 100' may be moved to the read-only medium 40.

The extracted research results 100' can preferably only be accessed in a controlled way via a special research application 30 in order to avoid misuse. The research application 30 could be shipped together with the read-only medium 40 which may only allow extracting a part of the extracted contents 100' with the correct reference information 120, e.g. the journal the information was published in. The research application 30 could also be time-restricted and / or allow access to only a part of the extracted contents 100' for example via keywords. These features may be controlled by a license file.

The user may then use the extracted research results 100' with the correct reference information 120 by copying it from some kind of clipboard to his/her own publication. Furthermore, the size of the information that can be copied may be limited. Further features of the research application 30 are also possible, e.g. performing a search within the contents of the read-only medium 40 or even performing a search within the contents 100 of the original database 10 from the research application 30. In the latter case, the search may be performed directly over a network connection or locally within a search index stored on the read-only medium 40. Additionally or alternatively, the read-only medium 40 with the extracted contents 100' could be provided for free and customers could be only charged for the access to the full content 100 of the original database 10, e.g. via the reference information 120.

## Claims

1. A database system (2) for providing access to contents (100) of a database (10), the database system (2) comprising:
a. a control logic (25) being adapted for extracting a subset (100') of the contents (100) and / or corresponding reference information (120) from the database (10) and for applying a time-stamp to the extracted contents (100');
b. a read-only database (20) being adapted for storing the extracted contents (100') and / or the corresponding reference information (120); wherein
c. the control logic (25) is adapted for providing access to the extracted contents (100') and / or the corresponding reference information (120) only through an access application (30).

2. The database system (2) of claim 1, wherein the control logic (25) is further adapted for encrypting and / or compressing the extracted contents (100') and / or the corresponding reference information (120).

3. The database system (2) of claim 1 or 2, wherein control logic (25) is further adapted for exporting the extracted contents (100') and / or the corresponding reference information (120) onto a read-only medium (40).

4. The database system (2) of any of the claims 1 - 3, wherein the reference information (120) comprises references onto the contents (100) of the database (10).

5. An access application (30) for providing access to contents (100) of a database (10), wherein the access application (30) is adapted for controlling access to extracted contents (100') and / or corresponding reference information (120) of a database system (2) of any of the claims 1 - 4.

6. The access application (30) of claim 5, being stored on a read-only medium (40), wherein the read-only medium (40) comprises the extracted contents (100') and / or the corresponding reference information (120) and wherein the access application (30) is adapted for providing access to the extracted contents (100') and / or the corresponding reference information (120) stored on the read-only medium (40).

7. The access application (30) of claim 5 or 6, being adapted for providing access to the extracted contents (100') and / or the corresponding reference information (120) based on a time-restriction.

8. The access application (30) of any of the claims 5 - 7, being adapted for restricting access to only a part of the extracted contents (100') and / or the corresponding reference information (120).

9. The access application (30) of any of the claims 5 - 8, being adapted for providing access to the extracted contents (100') and / or the corresponding reference information (120) based on a license file.

10. The access application (30) of any of the claims 5 - 9, being adapted for copying the extracted contents (100') and / or the corresponding reference information (120) to a clipboard for further processing.

11. A system for providing access to contents (100) of a database (10), the system comprising a database system (2) of any of the claims 1 - 4 and an access application (30) of any of the claims 5 - 10.

12. A method for providing access to contents (100) of a database (10) using a database system (2) of any of the preceding claims 1 - 4 and an access application (30) of any of the claims 5 - 10.

13. A computer program comprising instructions for implementing a method of claim 12.
